# EUROPÄISCHE PATENTSCHRIFT

(11) **EP 1 102 030 B1**
(45) Veröffentlichungstag und Bekanntmachung des Hinweises auf die Patenterteilung: **06.10.2004**
(21) Anmeldenummer: 99122778.6
(22) Anmeldetag: 16.11.1999
(51) Int. Cl.: G01B 7/02, G01B 3/11

(54) **Messseil-Wegsensor**
Measuring line with length indicating transducer
Ligne de mesure avec capteur indicateur de la longueur

(43) Veröffentlichungstag der Anmeldung: 23.05.2001
(73) Patentinhaber: ASM Automation Sensorik Messtechnik GmbH, 85452 Moosinning (DE)
(72) Erfinder: Steinich, Klaus-Manfred, 85604 Poering (DE)
(74) Vertreter: Alber, Norbert, Dipl.-Ing.

(56) Entgegenhaltungen:
- EP-A- 0 745 829
- DE-U- 29 707 253
- GB-A- 1 194 558
- US-A- 4 653 190
- US-A- 5 236 144

## Beschreibung

### I. Anwendungsgebiet

Die Erfindung betrifft Meß-Wegsensoren, also Wegsensoren nach dem Meßseil-Prinzip.

### II. Technischer Hintergrund

Derartige Wegsensoren bestehen aus einer exakt definierten und positionierten Seiltrommel, auf welche das Meßseil - in der Regel nur in einer einzigen Lage - aufgewickelt und mit einem Ende befestigt ist.

Das andere freie Ende des Meßseiles ist an demjenigen Gegenstand befestigt, dessen Lageveränderung gegenüber dem Sensor exakt gemessen werden soll.

Bei relativer Entfernung dieses Gegenstandes von der Seiltrommel des Meßseil-Wegsensors werden die Winkelbewegungen der Meßseil-Trommel mittels eines damit drehfest gekoppelten Drehwinkelsensors in eine exakte Entfernungslänge umgerechnet. Eine in der Regel koaxial mit der Meßseil-Trommel wirkverbundene Drehfeder stellt bei der Wiederannäherung des zu messenden Gegenstandes das Aufrollen des Meßseiles auf der Meßseil-Trommel sicher.

Derartige Meßseil-Wegsensoren werden in den unterschiedlichsten technischen Aggregaten eingesetzt, beispielsweise zur Lagebestimmung von Fahrstuhlkabinen im Fahrstuhlschacht, bei der ständigen Überwachung der Winkelstellung von Höhenruder und Seitenruder in Flugzeugen oder ähnlichem.

Um die gewünschte Meßgenauigkeit dieser Meßseil-Wegsensoren zu erzielen, muß einerseits die absolute Winkeltreue zwischen Meßseil-Trommel und Drehwinkelgeber sichergestellt sein. Hierfür ist unter anderem unbedingt und unter allen Arbeitsbedingungen die freie ungehinderte Drehung der Meßseil-Trommel notwendig, da eine Hemmung der Seiltrommel das Meßergebnis grob verfälschen würde. Vor allem muß ein Schleifen der Seiltrommel am Gehäuse, z. B. aufgrund mechanischer Beanspruchung, Wärmeverzug der Gehäuseteile etc. vermieden werden.

Aus diesem Grund wurde die Gehäuse der Meßseil-Wegsensoren bisher meist aus Metallteilen zusammengesetzt. Die Herstellung in Spritzgußtechnik aus Kunststoff oder Leichtmetall ist bisher aufgrund der wenig befriedigenden Genauigkeit und des komplizierten Zusammenwirkens der einzelnen Bauteile, wie beispielsweise aus der EP 0 745 829 A1 ersichtlich kaum verbreitet gewesen.

Auf der anderen Seite sind derartige Meßseil-Wegsensoren umso universeller einsetzbar, je günstiger deren Herstellungspreis gehalten werden kann, und je universeller beispielsweise die Befestigungsmöglichkeiten des Sensors gegenüber der Umgebung gestaltet sind.

### III. Darstellung der Erfindung

### a) Technische Aufgabe

Es ist daher die Aufgabe gemäß der vorliegenden Erfindung, einen kostengünstig herzustellenden und dennoch exakt funktionierenden Meßseil-Wegsensor zu schaffen, der insbesondere eine Vielzahl von Befestigungsmöglichkeiten gegenüber der Umgebung ermöglicht. Da die Herstellungskosten eines derartigen Sensors unter anderem stark vom Zeitaufwand beim Zusammenbau des Sensors abhängen, ist es ferner eine Aufgabe der vorliegenden Erfindung, ein Verfahren zur Montage eines derartigen Sensors zu schaffen, welches einen schnellen und damit kostengünstigen Zusammenbau des Sensors ermöglicht.

### b) Lösung der Aufgabe

Diese Aufgaben sind durch die Merkmale der Ansprüche 1 und 8 gelöst. Vorteilhafte Ausführungsformen ergeben sich aus den Unteransprüchen.

Dadurch, daß das Gehäuse, welches den mechanischen Innenraum umschließt, also Seiltrommel und Flachspiralfeder aufnimmt, wenigstens zwei, vorzugsweise vier plane und im rechten Winkel zueinander stehende Außenflächen aufweist, und auf jeder Seite eine oder vorzugsweise zwei parallell laufende nach außen offene Nuten aufweist, die jeweils von den Berührungskanten der Außenflächen gleichen Abstand einnehmen, kann das Gehäuse und damit der Sensor in unterschiedlichsten Orientierungen mit Hilfe der gleichen Spannpratzen an einem Bauteil der Umgebung befestigt werden, also mit dem Seilauslauf parallel oder senkrecht zum tragenden Bauteil.

Sofern auch die Stirnflächen des Gehäuses zu den die Nuten tragenden Außenflächen im rechten Winkel verlaufen, und in den Stirnflächen die in den Ecken des nicht nur rechteckigen, sondern vorzugsweise in Längsrichtung betrachtet quadratischen Gehäuses vorhandenen Verschraubungen offen sichtbar in diesen Stirnflächen enden, können durch Anordnung der Muttern auf den entsprechenden Schrauben in entsprechenden sechseckigen Vertiefungen der Stirnflächen Muttern verwendet werden, in die von der einen Stirnseite her die entsprechenden Schrauben, die das Gehäuse zusammenhalten, nur teilweise eindringen, so daß von der anderen Seite her andere Schrauben zur Befestigung gegenüber der Umgebung verwendet werden. Wenn dann die Befestigung gegenüber der Umgebung mittels eines Montagewinkels erfolgt, der durch bogenförmige oder parallellaufende diagonale Langlöcher eine Variabilität in der Winkelstellung entweder gegenüber dem Umgebungsbauteil oder gegenüber dem Sensor ermöglicht, sind auf einfache Art und Weise die unterschiedlichsten Montagemöglichkeiten zu realisieren.

Der innere Aufbau des Sensors ist weiterhin so gewählt, daß einerseits die Montage sehr einfach und schnell möglich ist, und andererseits eine Herstellung in Kunststoffspritztechnik, also mit den dabei notwendigerweise auftretenden Maßabweichungen, sowohl bei der Herstellung als im Arbeitseinsatz des Sensors, möglich ist.

In diesem Sinne besteht das Gehäuse, welches den mechanischen Innenraum (die Flachspiralfeder und die Seiltrommel) umgibt, und welches die Form eines Quaders mit aufgesetztem kleineren Quader, nämlich dem Seilaufsatz, hat, nicht wie bisher üblich aus zwei halbschalenförmigen Gehäuseteilen, deren Berührungsebene durch den Seilaufsatz hindurch verläuft.

Stattdessen ist der eine Lagerschild, welcher die Flachformfeder aufnimmt, und deshalb die geringere Erstreckung in Längsrichtung (Axialrichtung des Drehzapfens des Drehwinkelgebers) wie bisher bereits bekannt ein topfförmiger Lagerschild, der jedoch hinsichtlich seiner Tiefe in Längsrichtung so gering wie möglich gehalten wird, so daß dieser Lagerschild hinsichtlich des Seilaufsatzes gerade eben noch dessen eine Seitenwand mitumfaßt, während der gesamte Rest des Seilaufsatzes Bestandteil des anderen Lagerschildes ist, welcher damit eine wesentlich größere Längserstreckung besitzt.

Dieser andere Lagerschild ist wegen der größeren Axialerstreckung in Längsrichtung gerade nicht topfförmig, also mit geschlossenem Boden, sondern stirnseitig beidseits offen ausgebildet. Die nach außen gerichtete Stirnfläche wird durch ein separates Bauteil, die sogenannte Poti-Lagerscheibe, welche drehfest mit dem Drehwinkelgeber (der auch ein Potentiometer sein kann) verbunden wird, verschlossen. Dies hat hinsichtlich der Fertigungstoleranzen herstellungstechnische Vorteile, und erleichtert auch die Nulllagenjustierung des Drehwinkelgebers.

In diesem Zusammenhang sind die in den vier Ecken untergebrachten Verschraubungen der beiden Lagerschilde gegeneinander unterschiedlich verwendbar, aufgrund des gewählten radialen Abstandes der hierfür vorhandenen Durchgangsöffnungen in den Gehäuseecken gegenüber der Poti-Lagerscheibe:

Bei Verwendung von Schrauben ohne zusätzlich Beilagscheibe ragen die Schraubenköpfe nicht mehr in den Bereich der Poti-Lagerscheibe hinein, und dienen ausschließlich der Fixierung der beiden Lagerschilde gegeneinander. Dies wird bei zwei diagonal gegenüberliegenden Verschraubungen durchgeführt. Die beiden anderen ebenfalls diagonal gegenüberliegenden Verschraubungen werden unter Zwischenlegen einer im Durchmesser größeren Unterlegscheibe festgezogen, wodurch die Poti-Lagerscheibe und damit auch die Drehlage des hiermit drehfest verbundenen Drehwinkelgebers in der gewünschten Winkelstellung gegenüber dem Lagerschild fixiert wird.

Die Poti-Lagerscheibe selbst wird auf dem Drehzapfen des Drehwinkelgebers nicht mittels einer stirnseitig anliegenden und auf Kraftschluß wirkenden Mutter fixiert, sondern durch eine entsprechende sechseckige stirnseitige Ausnehmung in der Poti-Lagerscheibe ist eine formschlüssige Verbindung zwischen dieser Mutter und der Lagerscheibe gegeben.

In Richtung des freien Endes des Drehza pfens folgt auf die Poti-Lagerscheibe die Seiltrommel, die auf dem Drehzapfen wie bekannt mittels radial wirkender Klemmschrauben verschraubt wird. Im vorliegenden Fall sind diese beiden Klemmschrauben unter einem Winkel von 120° zueinander angeordnet, wodurch ein definiert spielfreies Verklemmen der Seiltrommel auf dem Drehzapfen möglich ist

An seinem freien Ende ist der Drehzapfen soweit in Längsrichtung durch einen Schlitz eingeschnitten, daß dieser Schlitz direkt zum Einstecken und damit der formschlüssigen Fixierung des Herzes des Flachspiralfeder dienen kann, ohne weitere Hilfsmittel wie Querniet oder ähnliches zu benötigen.

Das Zusammenführen der beiden Teile erfolgt, nachdem die Flachspiralfeder in den dafür vorgesehenen Federraum des topfförmigen Lagerschildes eingelegt und dabei auch die Lasche am äußeren freien Ende der Flachspiralfeder in Längsrichtung über einen hierfür einstückig an dem Lagerschild ausgebildeten, also mitgespritzten, Zapfen übergeschoben ist. Die Flachspiralfeder ist dabei so vorgefertigt, daß nach diesem Einsetzen sich das Herz der Flachspiralfeder nicht radial außen im Federraum anlegt, sondern zentrisch innerhalb der Feder verbleibt, ohne jede Fixierung.

Dadurch ist es möglich, nach Einsetzen der Feder den Federraum stirnseitig mittels einer Gleitscheibe, die ebenfalls aus Kunststoff besteht, in einen speziellen Absatz einzudrücken und dort kraftschlüssig zu fixieren. Der Kraftschluß wird erreicht durch einen gezielt entlang des Umfanges dieser runden Gleitscheibe vorstehenden Spritz-Grat, in dem die Berührungsebene der Formhälften für diese Gleitscheibe in die mittlere Radialebene gelegt wird. Der in Längsrichtung sehr schmale Grat wird beim Eindrücken in einen entsprechenden Absatz des Lagerschildes soweit deformiert, daß eine sichere kraftschlüssige Fixierung in diesem Lagerschild gegeben ist, bis die beiden vormontierten Lagerschilde gegeneinander verschraubt werden.

Dabei ist es notwendig, daß die eine Lagerschild-Einheit, die den Drehzapfen des Drehwinkelgebers umfaßt, mit ihrem vorstehenden geschlitzten freien Ende durch die Zentralöffnung der Gleitscheibe des anderen Lagerschildes hindurchgesteckt wird und dort - ohne diese Stelle einsehen zu können - der Schlitz des Drehzapfens in das Herz der Drehfeder einrastet. Zu diesem Zweck ist eine gute radiale Vorjustierung notwendig, die zunächst durch die Bemessung der Zentralöffnung der Gleitscheibe, die nur unwesentlich größer als der Durchmesser des Drehzapfens ist, bewerkstelligt wird. Beim weiteren Zusammenstecken wird ein an dem einen Lagerschild, nämlich dem stirnseitig beidseits offenen Lagerschild der Seiltrommel, konzentrisch in Axialrichtung vorstehender Kragen als zusätzliche Radialfixierung, indem dieser Kragen in einen entsprechenden Absatz des anderen Lagerschildes eingreift. Durch diese Radialführung ist es anschließend auch problemlos möglich, vor dem Verschrauben der beiden Lagerschilde gegeneinander diese zunächst um die Längsachse mehrfach gegeneinander zu verdrehen und dadurch die im Gehäuse aufgenommene und bereits drehfest mit dem Drehzapfen verbundene Flachspiralfeder in der notwendigen Art und Weise aufzuziehen.

Erst danach erfolgt das Verschrauben der Lagerschilde gegeneinander durch die vorbeschriebenen ersten beiden Verschraubungen und anschließend die Nulllagefixierung des Drehwinkelgebers durch entsprechende Verdrehung der Poti-Lagerscheibe gegenüber dem restlichen Gehäuse und Festziehen der beiden anderen Verschraubungen.

Die Seiltrommel selbst weist - für die Fixierung des Meßseiles an ihrem an der Seiltrommel festgelegten Ende - nahe der einen Flanke eine tangentiale Schlitzung der Wickelfläche auf, um ein Hindurchtreten des Anfangs des Meßseiles in möglichst flach-tangentialer Richtung zu ermöglichen, während die Fixierung im inneren Hohlraum der Seiltrommel durch Aufklemmen eines dickeren Metallröhrchens auf das Seilende erfolgt, welches dicker ist als der Schlitz in der Wickelfläche.

Als Material für die Gehäuseteile wird vorzugsweise POM 30 bzw. POM G30 verwendet, also ein Kunststoff, der einen hohen Anteil an mikroskopisch kleinen Glaskugeln enthält, die optimale Gleiteigenschaften dieses Kunststoffes gegenüber den beteiligten Metallelementen, wie der Flachspiralfeder, der Seiltrommel, dem Drehzapfen des Drehwinkelgebers und des Meßseiles ergeben.

Da innerhalb ein- und desselben Gehäuses vor allem im Durchmesser unterschiedlich große Seiltrommeln eingesetzt werden können, je nach spezifischem Anwendungsfall, muß auch die Seilauslaßöffnung in der Stirnfläche des Seilaufsatzes an unterschiedlichen Stellen liegen. Zu diesem Zweck wird bei der Spritzgußherstellung des Gehäuses keine Seilauslaßöffnung vorgesehen, sondern diese nachträglich an der gewünschten Stelle durch Bohren hergestellt.

Da somit kein Seileinlaufstutzen durch ein spezielles, härteres, abriebfesteres Material als das Gehäusematerial vorhanden ist, kommt es für einen akzeptabel geringen Verschleiß dieser Seileinlauföffnung auf eine optimale Gleitpaarung gegenüber dem Meßseil an. In diesem Sinne hat es sich erwiesen, daß - bei Gehäuseabmessungen von ca. 3 cm x 3 cm x 3 cm des Gehäusegrundkörpers und einem Überstand des Seileinlaufstutzens demgegenüber von etwa 1 cm sowie 10 Wicklungen des Meßseiles auf der Meßseiltrommel nebeneinander in einer einzigen Lage ein Meßseil mit einer Dicke von 0,4 - 0,6 mm optimal ist, insbesondere, wenn dieses Meßseil entweder aus einer zentralen Litze mit ca. 15 - 20 umgebenden, verdrillten Litzen besteht, oder aus 7 gegeneinander verdrillten Teillitzen, gegebenenfalls davon einer Zentrallitze, wobei jede der Teillitzen wiederum aus 5 - 8 Einzellitzen verdrillt hergestellt ist.

Es hat sich ferner erwiesen, daß der Überstand des Seileinlaufstutzens optimiert werden kann, nämlich der radiale Abstand der Seilauslauföffnung gegenüber der Wickelfläche der Seiltrommel. Dieser Abstand sollte so bemessen sein, daß der Winkel zwischen den beiden maximalen Bewicklungsstellungen, also Meßseil anliegend an den beiden Flanken der Meßseiltrommel, in einem bestimmten. Bereich liegt. Ferner wird als Flachformfeder eine Feder verwendet, deren Federkennlinie im Arbeitsbereich, in dem eine Abwicklung der Feder möglich ist, linear ansteigend verläuft.

Im inneren Endbereich der Federkennlinie, also Abwicklung der innersten Windungen der Flachformfeder, welche aufgrund der begrenzten Meßseillänge gar nicht möglich ist, ist dagegen ein unregelmäßiger und steilerer Verlauf der Federkennlinie akzeptabel. Um Unbefugte vom Öffnen des Sensors abzuhalten, und dadurch mögliche Verletzungen durch die herausspringende Flachformfeder zu vermeiden, werden zusätzlich vandalensichere Schrauben verwendet, also Imbusschrauben, Schlitzschrauben oder Kreuzschlitzschrauben, die mit normalem Werkzeug nicht zu öffnen sind, weil beispielsweise im Zentrum der Imbusöffnung der Schraube ein Zapfen aufragt, und dadurch ein normaler Imbusschlüssel nicht verwendet werden kann, sondern nur ein spezieller mit mittiger Aufnahmeöffnung für den Zapfen. Gleiche Lösungen sind bei Kreuzschlitz- und normalen Schlitzschrauben möglich.

Aus dem gleichen Grund ist die vom Drehwinkelgeber abgewandte Stirnseite des Sensorgehäuses nicht primär für die Befestigung des Sensors vorgesehen, sondern bleibt in der Regel frei, und wird daher mit einer beim Spritzen bereits angebrachten, erhabenen oder vertieften, Beschriftung im Sinne einer Warnung vor unbefugtem Öffnen des Sensors versehen, was sich aus Haftungsgründen sehr empfiehlt.

Die Öse am freien Ende des Meßseiles ist auf das Seil aufgespritzt, aufgepreßt oder mit diesem verknotet, und besteht vorzugsweise aus Edelstahl, Kupfer oder einer Kupfernickelverbindung.

Zusätzlich zu dem den mechanischen Innenraum umgebenden Gehäuse kann auf die Stirnseite, von welcher der Drehwinkelgeber abragt, ein weiterer topfförmiger Gehäuseaufsatz aufgesetzt werden, der den Drehwinkelgeber umgibt und schützt, und in dem zusätzlich die Platine mit der Auswerteelektronik für den Sensor untergebracht ist.

Dieser Gehäuseaufsatz kann wiederum aus dem gleichen Kunststoffmaterial bestehen und ebenfalls durch Spritzgießen hergestellt sein, oder - bei geforderter EMV-Sicherheit - aus Aluminium mittels Fließpressen hergestellt sein bzw. als aluminiumbeschichtetes Kunststoffteil hergestellt sein.

### c) Ausführungsbeispiele

Eine Ausführungsform gemäß der Erfindung ist im folgenden anhand der Figuren beispielhaft näher beschrieben. Es zeigen:
- Fig. 1:: den fertig montierten Sensor in unterschiedlichen Ansichten,
- Fig. 2:: den Sensor der Fig. 1 in einer Schnittdarstellung,
- Fig. 3:: den einen Lagerschild in Detailansichten,
- Fig. 4:: den anderen Lagerschild im Detail,
- Fig. 5:: die Poti-Lagerscheibe,
- Fig. 6:: die Seiltrommel,
- Fig. 7:: die Gleitscheibe,
- Fig. 8:: den Gehäuseaufsatz und
- Figuren 9:: unterschiedliche Montagewinkel.

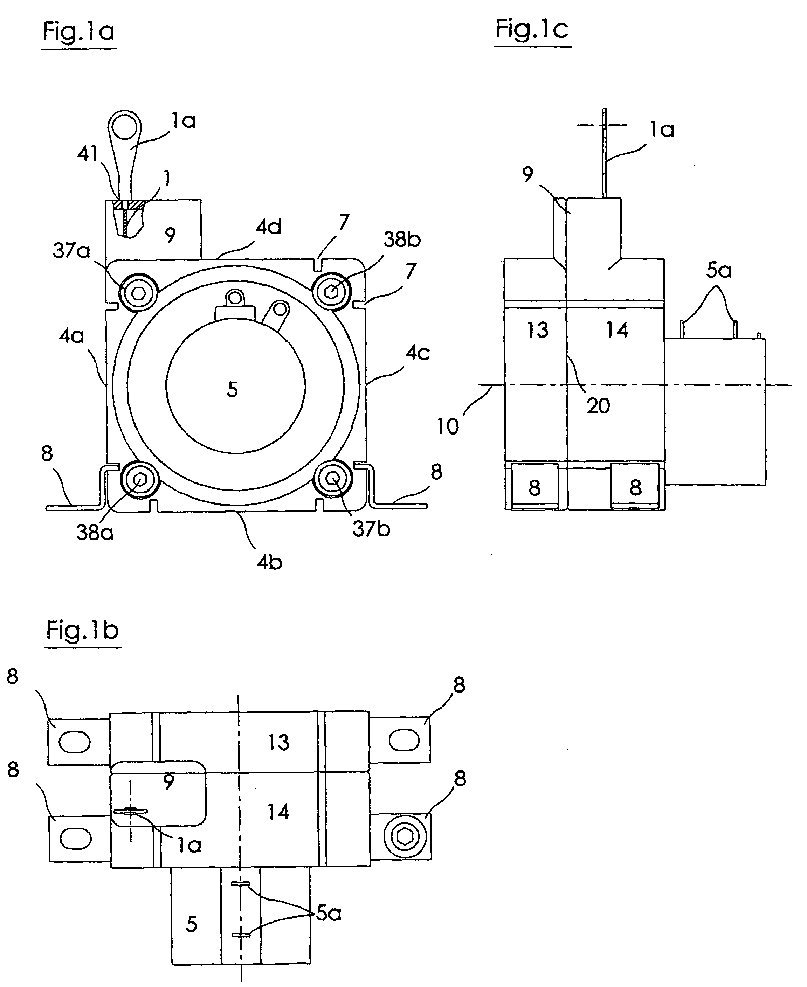

Wie die aus unterschiedlichen Raumrichtungen betrachteten Darstellungen des fertigmontierten Sensors in Fig. 1 zeigen, bei dem der Drehwinkelgeber 5 frei abragend und nicht abgedeckt ist, besteht dieses den mechanischen Innenraum umgebende Gehäuse aus einem rechteckigen, in Längsrichtung 5 gemäß Fig. 1a betrachtet quadratischen, Hauptteil, an dessen einer Außenfläche sich der ebenfalls quaderförmige, aber deutlich kleinere Seilaufsatz 9 anschließt, der mit einer der zur Längsrichtung 10 parallelen Außenfläche 4a eine fluchtende Außenfläche besitzt.

Dabei wird eine Baugrößen-Reihe von Sensoren bevorzugt, bei der die Gesamtlänge A des Gehäuses, also Erstreckung der Außenfläche 4a des Hauptteils tangential zur Längsrichtung 10 zusammen mit der Erstreckung des angrenzenden Seilaufsatzes, wiederum die Erstreckung der Außenfläche alleine der nächsten Gehäusegröße darstellt.

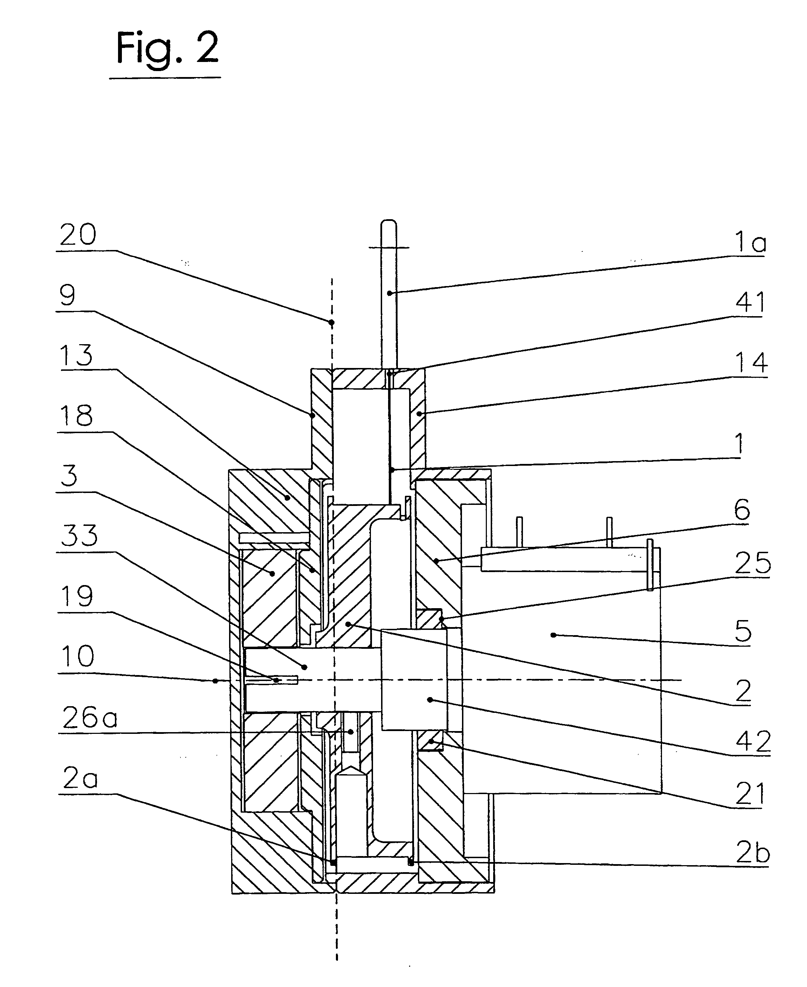

Wie die Figuren 1 zeigen, befindet sich in der nach außen gerichteten Stirnfläche des Seilaufsatzes 9 die Seilauslauföffnung 41, durch welche das Meßseil 1 von der außen befindlichen Öse 1a des Meßseiles nach innen zur in Fig. 2 ersichtlichen Seiltrommel 2 läuft.

Die Figuren 1 zeigen ferner, daß in den parallel zur Längsrichtung 10 verlaufenden Außenflächen 4a,b,c die nicht den Seilaufsatz 9 aufweisen, zwei in Längsrichtung 10 verlaufende, nach außen offene Nuten 7 so angeordnet sind, daß diese von den ebenfalls in Längsrichtung 10 verlaufenden Kanten des Gehäusehauptteiles immer den gleichen Abstand besitzen.

Die den Seilaufsatz 9 tragende Außenfläche 4d weist nur eine solche Nut 7 auf der vom Seilaufsatz 9 abgewandten Seite auf.

Mit Hilfe dieser Nuten 7 kann das Gehäuse des Sensors mittels Z-förmiger, um jeweils 90° gekröpfter, Pratzen 8 auf einem beliebigen tragenden Bauteil verschraubt werden, in dem die Kröpfung der Pratzen 8 dem Abstand der Nuten 7 von der nächsten Kante entspricht. Die Pratzen 8 greifen dabei mit ihrem einen freien Ende in die Nut 7 ein, während das andere freie Ende auf dem tragenden Bauteil verschraubt wird.

Damit ist jede beliebige Anordnung, also im rechten Winkel oder parallel abstrebendes Meßseil zum tragenden Bauteil, möglich.

Zusätzlich ist auch eine Befestigung des Sensors über die stirnseitig frei endenden Verschraubungen 37a,b,.38a,b, die in den Ecken des quadratischen Gehäuses die beiden Lagerschilde des Gehäuses miteinander verbinden, ebenfalls eine Befestigung gegenüber der Umgebung möglich, wie im folgenden näher beschrieben wird. Auf der einen Stirnseite des Gehäuses, nämlich dem Lagerschild 14, steht der Drehwinkelgeber 5 in Längsrichtung 10 vom Gehäuse ab.

Die Berührungsebene 20 zwischen - wie besser in Fig. 2 zu erkennen - topfförmigem Lagerschild, in welchem die Flachspiralfeder 3 aufgenommen ist, und dem an beiden Stirnseiten offenen Lagerschild 14, in dem die Seiltrommel 2 und die den Drehwinkelgeber 5 haltende Poti-Lagerscheibe 6 aufgenommen sind, verläuft dabei quer, insbesondere im rechten Winkel, zur Längsrichtung 10 und so durch den mit den beiden Lagerschilden jeweils einstückig ausgebildeten Teilen des Seilaufsatzes 9 hindurch, daß der im Inneren hohle Seilaufsatz 9 mit einer Seitenwand noch zum in Längsrichtung 10 schmaleren Lagerschild 13, mit allen übrigen Bestandteilen dagegen zum breiteren Lagerschild 14 gehört.

Die Lagerschilde sind - ebenso wie die weiteren aus Kunststoff befindlichen Einzelteile, die Gleitscheibe 18 und die Lagerscheibe 6 - als KunststoffSpritzgußteil ausgeführt.

Anhand der Schnittdarstellung der Fig. 2 und den nachfolgenden Detaildarstellungen wird die Vorgehensweise bei der Montage des Sensors und in diesem Zusammenhang die Details der jeweiligen Bauteile näher beschrieben: Zunächst werden die beiden Lagerschilde 13 und 14 jeweils mit den einschlägigen Komponenten ausgestattet: Beginnend mit dem Lagerschild 14 wird zunächst die Lagerscheibe 6 mit dem Drehwinkelgeber 5 verschraubt.

Wie Fig. 2 zeigt, weist der Drehwinkelgeber 5 einen vorstehenden Drehzapfen 33 mit rundem Querschnitt auf, der nahe dem Korpus des Drehwinkelgebers 5 mit einem Außengewinde 42 ausgestattet ist, und an seinem freien Ende mit einem in Längsrichtung verlaufenden, stirnseitig und zu den Seiten hin offenen, Schlitz 19 ausgestattet ist, dessen Tiefe wenigstens der Breite der Flachspiralfeder 3 entspricht.

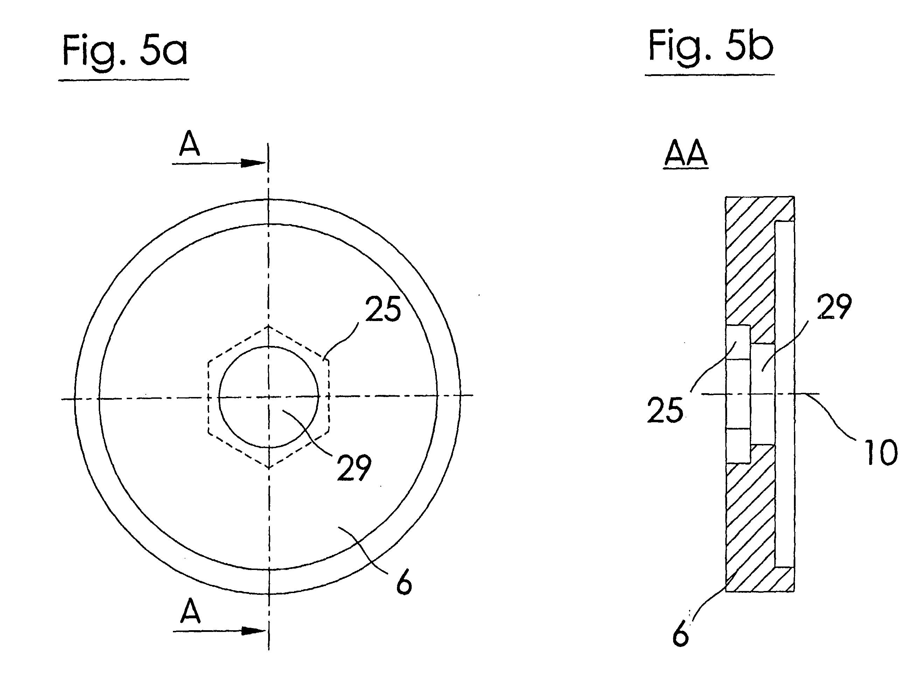

Die in Fig. 5 dargestellte Lagerscheibe 6 besitzt einen runden Außendurchmesser sowie eine zentrale, runde Durchgangsöffnung 29, die etwas größer ist als der Außendurchmesser des Außengewindes 42 am Drehzapfen 33.

Im Querschnitt betrachtet ist die Lagerscheibe 6 leicht topfförmig ausgebildet, mit einer stirnseitigen Vertiefung und damit einer randseitig vergrößerten axialen Erstreckung in Längsrichtung 10.

Auf der von der Vertiefung abgewandten planen gegenüberliegenden Stirnseite ist eine zentrale, sechseckige Vertiefung 25 derjenigen Größe eingearbeitet, daß dort eine Einlegemutter 21 genau hineinpaßt, die mit ihrem Innengewinde auf das Außengewinde 42 des Drehzapfens 33 paßt. Damit kann der Drehwinkelgeber 5 mit dem freien Ende seines Drehzapfens 33 voraus von der topfartig vertieften Stirnseite der Lagerscheibe her durch deren Zentralöffnung 29 hindurchgeschoben und damit der in die sechseckige Vertiefung 25 eingelegten Einlegemutter verschraubt werden, bis Drehwinkelgeber 5 und Poti-Lagerscheibe 6 kraftschlüssig fest sowohl in axialer als auch in radialer Richtung miteinander verbunden sind.

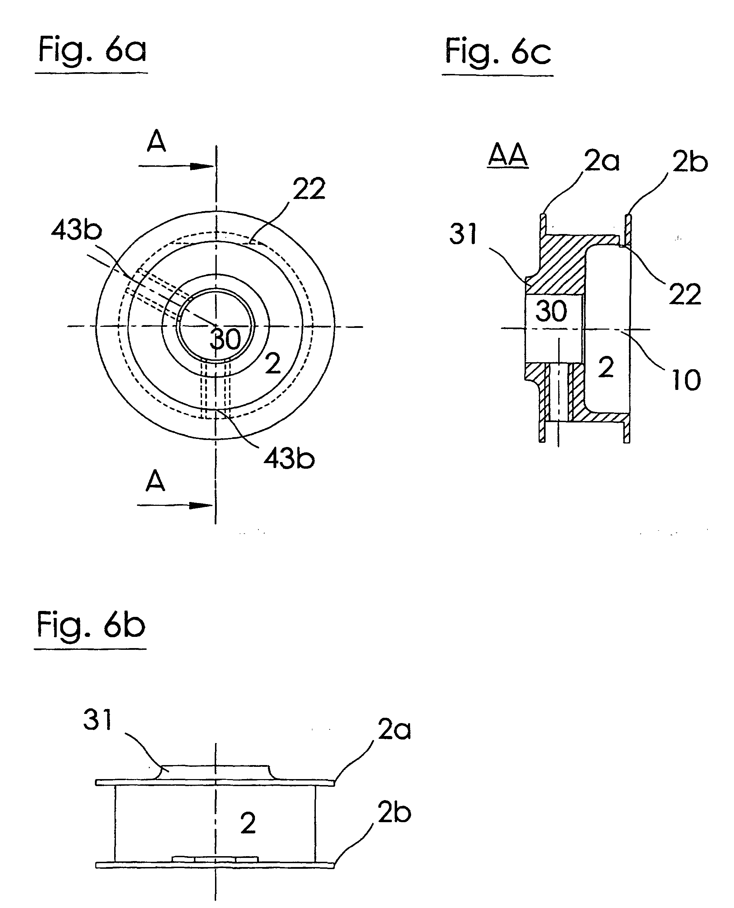

Anschließend wird auf das freie Ende des Drehzapfens 33 die Seiltrommel 2 aufgeschoben, die im Detail in Fig. 6 dargestellt ist.

Die Seiltrommel 2 ist - wie im Längsschnitt der Fig. 6c ersichtlich - ebenfalls topfförmig ausgebildet mit einer zentralen runden Durchgangsöffnung 30 zum Aufschieben auf den Drehzapfen 33 und einer demgegenüber koaxialen, radial weiter außen liegenden Wickelfläche zum Aufwickeln des Meßseiles 2. An den axialen Enden der Wickelfläche erstrecken sich ringförmig umlaufend Flanken 2a,b zusätzlich radial nach außen, um ein Herabfallen der Seilwicklungen zu vermeiden.

Ein Ringfortsatz 31 erstreckt sich zusätzlich in axialer Längsrichtung 10 in einer Richtung über die Wickelfläche hinaus, während die gegenüberliegende Hälfte der axialen Erstreckung im Zentrum der Wickeltrommel frei ist.

Durch das Fleisch des Radialsteges zwischen Wickelfäche und Durchgangsöffnung 30, also nahe des einen axialen Endes der Seiltrommel, erstrecken sich von der Wickelfläche aus um 120° zueinander versetzt jeweils eine radial verlaufende Gewindebohrung 43a,b bis in die Durchgangsöffnung 30 hinein, zum Eindrehen von Madenschrauben als Klemmschrauben 26a,b zwecks Verklemmen der Seiltrommel 2 auf dem Drehzapfen 33 in einer Position, in der die Seiltrommel 2 in axialer Richtung 10 nur noch geringfügig von der Lagerscheibe 6 beabstandet ist.

In dem axial gegenüberliegenden Endbereich ist in die Wickelfläche der Seiltrommel 2 ein tangentialer Schlitz 22 eingefräst, der die Wickelfläche durchdringt, und dem Einführen des innenliegenden Endes des Meßseiles 1 ins hohle Innere der Seiltrommel 2 dient.

Die so entstandene, aus Drehwinkelgeber 5, Lagerscheibe 6 und Seiltrommel 2 samt Meßseil 1 bestehende Baugruppe wird nunmehr - mit dem freien Ende des Drehzapfens 33 voraus - von außen stirnseitig in den beidseitig offenen Lagerschild 14 eingeschoben, bis die Poti-Lagerscheibe 6 in dem hierfür vorgesehenen, ebenfalls kreisförmigen inneren Absatz dieses Lagerschildes 14 sitzt. In dieser Stellung schließt die Lagerscheibe 6 in Längsrichtung außen etwa mit der Außenfläche des Lagerschildes 14 ab.

Die Montage des Meßseiles 1 kann dabei auf zweierlei Art und Weise erfolgen: Entweder war auf das Meßseil 1 am äußeren Ende die Öse 1a bereits befestigt, und das Meßseil 1 wurde mit dem inneren freien Ende durch die Seilauslauföffnung 41 im Seilaufsatz 9 nach innen gefädelt, sowie anschließend durch den Schlitz in der noch nicht auf dem Drehzapfen 33 montierten Seiltrommel 2 in deren Inneres geführt und dort mit einer Klemmhülse verstärkt, so daß das innere Ende nicht mehr durch den Schlitz zurückgezogen werden kann.

Die andere Möglichkeit besteht darin, daß die Klemmhülse am inneren Ende des Meßseiles bereits aufgebracht und das Meßseil durch den Schlitz in der Seiltrommel 2 hindurchgeführt und auf der Seiltrommel 2 aufgewickelt ist, wenn die Seiltrommel 2 auf dem Drehzapfen 33 montiert wird.

Nach Einsetzen der gesamten Baugruppe in den Lagerschild 14 wird dann das freie äußere Ende des Meßseiles 1 durch die Seilauslauföffnung 9 nach außen geführt und dort mit einer Öse 1a als äußerem Ende verklemmt.

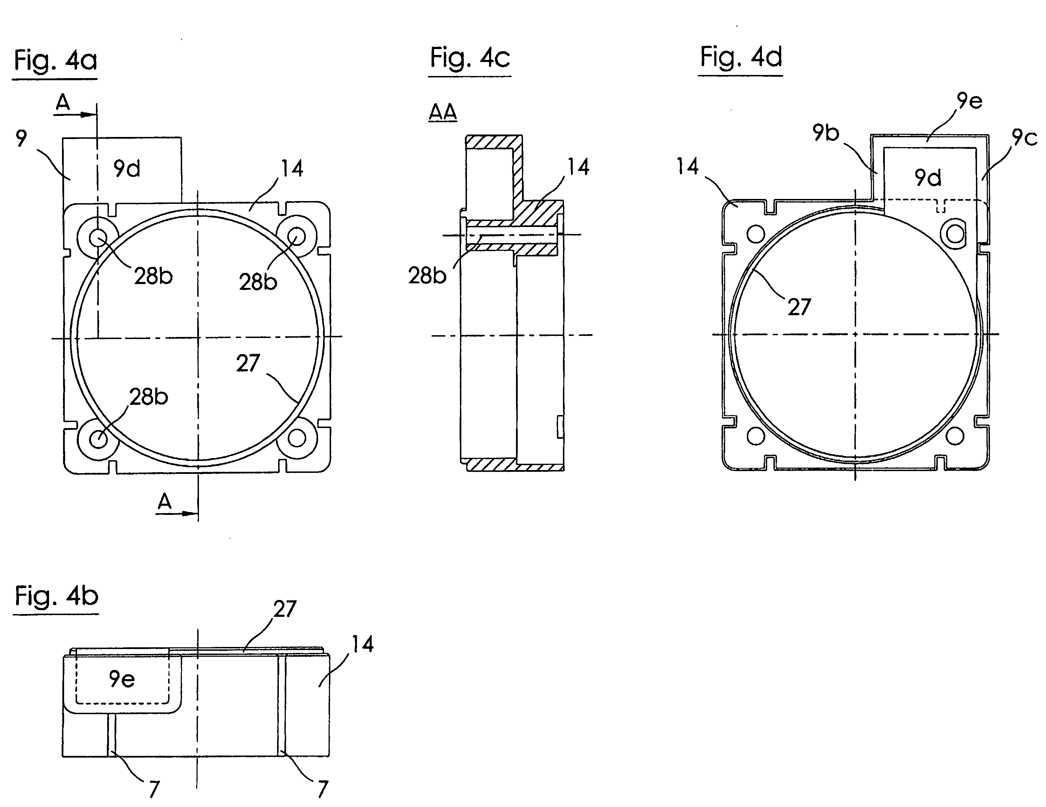

Dieser beidseits offene Lagerschild 14 ist im Detail in den Figuren 4 dargestellt: dabei ist zum einen zu erkennen, daß der Seilaufsatz 9 sowie der Hauptteil dieses Lagerschildes einstückig zusammen ausgebildet sind und einen gemeinsamen Hohlraum bilden, der jedoch nur in seinem Hauptteil beidseits stirnseitig offen ist, während der Seilaufsatz 9 stirnseitig sowohl in Längsrichtung als auch quer zur Längsrichtung geschlossen ist.

Die Figuren 4 zeigen ferner einen stirnseitig in Richtung auf den anderen Lagerschild 13 vorstehenden, den runden Innenraum fast vollständig umgebenden, in Längsrichtung vorstehenden Ringkragen 27, der lediglich im Bereich des Überganges zwischen Seilaufsatz 9 und Hauptteil des Lagerschildes 14 fehlt.

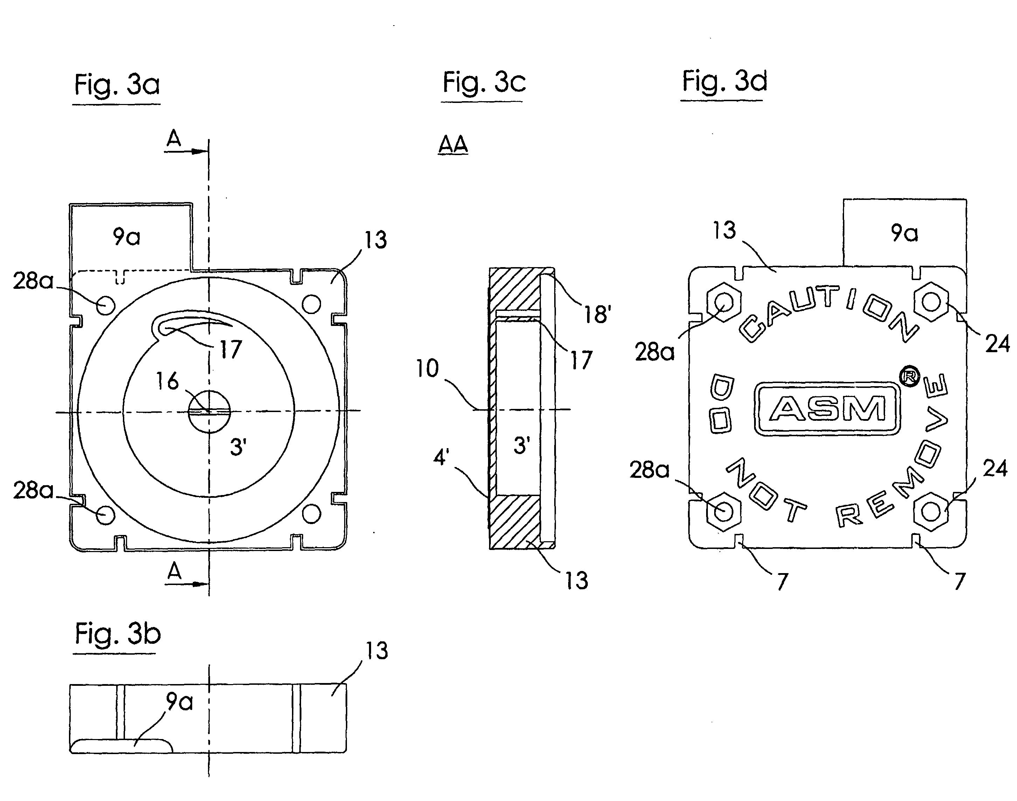

Der in den Figuren 3 dargestellte andere Lagerschild 13 unterscheidet sich dadurch, daß er zunächst auf seiner äußeren Stirnseite topfförmig geschlossen ist. Ferner ist bei diesem Lagerschild 13 vom Seilaufsatz 9 lediglich dessen eine Seitenwand 9a vorhanden, die angrenzend an die dem Lagerschild zugewandte, offene Stirnseite des Lagerschildes 13 einstückig zusammen mit diesem ausgebildet ist.

In der Aufsicht auf die offene Stirnseite der Fig. 3a ist der zentrale, im wesentlichen kreisförmige, Federraum 3' zu erkennen, dessen Tiefe gleich oder etwas größer als die Breite der dort aufzunehmenden Flachspiralfeder 3 ist.

Außerhalb des kreisförmigen Hauptraumes befindet sich eine Ausbuchtung, in der ein in seinem Querschnitt flügelprofilförmiger Zapfen 17, umgeben von einem Freiraum, in Längsrichtung vom Boden des Lagerschildes 13 aus in Längsrichtung abragt. Dieser Zapfen 17 dient dem Aufstecken der zu einer flachen Öse gebogenen Lasche des äußeren Endes der Flachspiralfeder 3. Im Zentrum des Federraumes 3' ist kein aufragender Zapfen oder irgendeine andere Vorrichtung zur Fixierung des inneren Endes, des sogenannten Herzes, der Flachspiralfeder vorhanden.

Nahe der offenen Stirnseite weist dieser Lagerschild 13 ferner einen zweiten, im Durchmesser größeren, ebenfalls kreisförmigen, Absatz 18' auf, der der Aufnahme einer ebenfalls kreisförmigen flachen Gleitscheibe 18 dient.

Wie die Fig. 3d zeigt, sind in den Eckbereichen der rechteckigen, vorzugsweise quadratischen, Hauptform dieses Lagerschildes 13 wiederum die Mündungen der Durchgangsöffnungen 28a,b... für die Verschraubungen der beiden Lagerschilde gegeneinander zu erkennen. Diese Mündungen sind jedoch in diesem Lagerschild 13 von konzentrisch angeordneten, sechseckigen Vertiefungen 24 umgeben, die der Aufnahme von auf die Verschraubungen aufzusteckenden Sechskantmuttern dienen, die in diesen Vertiefungen 24 drehfest aufgenommen werden können.

Der Rest der nach außen weisenden, geschlossenen Stirnfläche 4' dieses Lagerschildes 13 wird in der Regel zum Aufbringen einer erhabenen oder abgesenkten und damit dauerhaften Warnbeschriftung genutzt, die vor dem unbefugten Öffnen des Gehäuses warnt wegen der darin vorhandenen, vorgespannten Feder.

Diese in Fig. 2 linke Seite des Gehäuses wird vormontiert, indem zunächst die aufgewickelte Flachspiralfeder 3, deren Außendurchmesser im vorgewickelten Zustand gleich oder kleiner dem Durchmesser des Federraumes 3' ist, in die offene Stirnseite des Lagerschildes 3 in Längsrichtung 10 eingeschoben wird und dabei die Lasche am äußeren Ende der Flachspiralfeder über den Zapfen 17 geschoben wird.

Die Flachspiralfeder 3 ist dabei so vorgebogen bzw. vorgewickelt, daß nach dem Einschieben das Herz 16 der Flachspiralfeder, wie in Fig. 3a angedeutet, selbsttätig im Zentrum des Federraumes 3' steht.

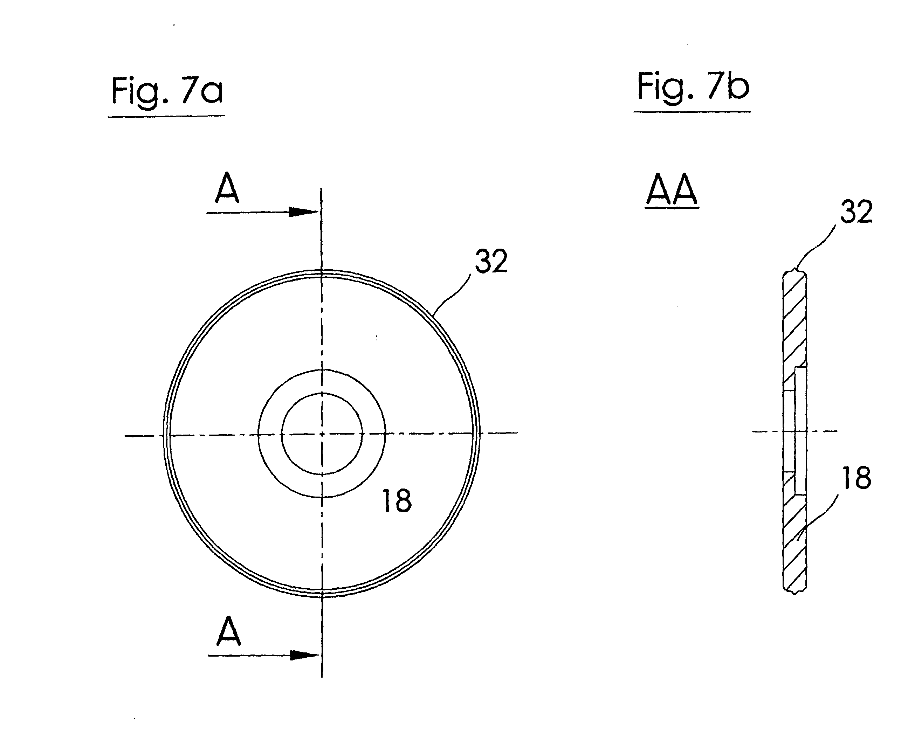

Anschließend wird die in Fig. 7 dargestellte kreisförmige, flache Gleitscheibe 18 in den hierfür vorgesehenen Absatz 18' des Lagerschildes 3 eingedrückt und dahin verklemmt. Das Verklemmen erfolgt dadurch, daß die Gleitscheibe 18 radial außen umlaufend einen in Längsrichtung schmalen Grat 32 aufweist, der beim Spritzguß-Herstellen der Gleitscheibe 18 entsteht, indem an dieser Stelle die Berührungsebene zwischen den beiden Formhälften, durch welche die Gleitscheibe 18 geformt wird, liegt. Aufgrund der geringen Querschnittsgröße des Grates 32 wird dieser beim Einschieben in den Absatz 18' zwischen Innenwandung des Absatzes 18' und äußerer Mantelfläche der übrigen Gleitscheibe 18 verquetscht und dient damit der kraftschlüssigen Fixierung der Gleitscheibe 18.

Die Gleitscheibe 18 weist ferner eine zentrale Durchgangsöffnung mit einem konzentrisch umgebenden, größeren Absatz auf. Die zentrale Durchgangsöffnung ist geringfügig größer als der Durchmesser des Drehzapfens 33.

Die Gleitscheibe 18 wird so in den Lagerschild 13 eingesetzt, daß der umgebende größere Absatz der Gleitscheibe 18 nach außen, also gegen den anderen Lagerschild 14 weist und den Ringfortsatz 31 der Seiltrommel aufnehmen kann, der damit als Anlauf gegenüber der als Verschleißteil dienenden Gleitscheibe 2 dient, und diese auch radial fixiert.

Der vormontierte Lagerschild 14 wird also mit dem freien Ende seines Drehzapfens 33 voraus durch die zentrale Durchgangsöffnung der Gleitscheibe 18 in den Federraum 3' des Lagerschildes 13 geschoben und dabei gedreht, bis der Quersteg des dort befindlichen Herzes der Flachspiralfeder 3 in den Schlitz 19 am freien Ende des Drehzapfens 33 hineingleitet, und damit Flachspiralfeder 3 und Drehzapfen 33 drehfest miteinander verbunden sind.

Beim weiteren Ineinanderschieben wird auch der Ringkragen 27 des Lagerschildes 14 in einen entsprechenden ringförmigen Innenabsatz des Lagerschildes 13 eingeführt, so daß bei Aneinanderlage der Lagerschilde 13 und 14 diese um die Längsrichtung 10 mehrfach gegeneinander verdreht werden können, bis die Flachspiralfeder 3 um die gewünschte Anzahl von Umdrehungen aufgezogen worden ist. Um diesen Zustand zu sichern, werden die beiden Lagerschilde 13, 14 durch Schrauben, welche durch zwei diagonal gegenüberliegende der vier Durchgangsöffnungen 28 a,b.. hindurchgesteckt und mittels auf der Gegenseite aufgesteckter Muttern fixiert werden, in der richtigen Drehlager axial gegeneinander gepreßt. Durch die beiden verbleibenden der Durchgangsöffnungen 28a,b .. werden Schraube hindurchgesteckt, bei denen unter den Schraubenkopf Beilagscheiben mit größerem Durchmesser auf Seiten des Lagerschildes 14 untergelegt werden. Der Durchmesser der Beilagscheiben ist dabei so groß, daß - wie am besten in Fig. 4a ersichtlich - diese Beilagscheiben in den zentralen Freiraum des Lagerschildes 14 hineinragen und damit den äußeren Rand der dort befindlichen Poti-Lagerscheibe 6 radial nach innen etwas übergreifen.

Nunmehr wird der Drehwinkelgeber 5 zusammen mit der drehfest damit verbundenen Lagerscheibe 6 soweit gedreht, bis die an den Drehwinkelgeber 5 angeschlossene Auswerteelektronik in dem an der Öse 1a des Meßseiles befestigten zu überwachenden Bauteil in der gewünschten Nulllage auch tatsächlich ein Null-Signal liefert. In dieser Drehlage der Poti-Lagerscheibe 6 gegenüber dem Lagerschild 14 werden nunmehr die mit den Beilagscheiben unterlegten Schrauben festgezogen, und hierdurch die Nulllage des Sensors justiert.

Zum Verstellen der Nulllage müssen ebenfalls wiederum nur die beiden mit Beilagscheiben unterlegten und damit klar erkennbaren Schrauben etwas gelockert werden, so daß nicht die Gefahr einer unbeabsichtigten Öffnung des Gehäuses gegeben ist.

Falls - in Einzelfällen - der Sensor mit seiner Stirnfläche 4' auf seiten des Lagerschildes 13 an einem umgebenden Bauteil, beispielsweise einem vermittelnden Montagewinkel, montiert werden soll, werden auf dieser Seite längere Sechskantmuttern in den Vertiefungen 24 benutzt, als es zum Einschrauben der Enden der Durchgangsschrauben erforderlich wäre. Die verbleibende Innengewindelänge der längeren Sechskantschrauben dient dann zum Einschrauben von Befestigungsschrauben von der entgegengesetzten Seite, mit deren Hilfe der Sensor an einem tragenden Bauteil befestigt werden kann.

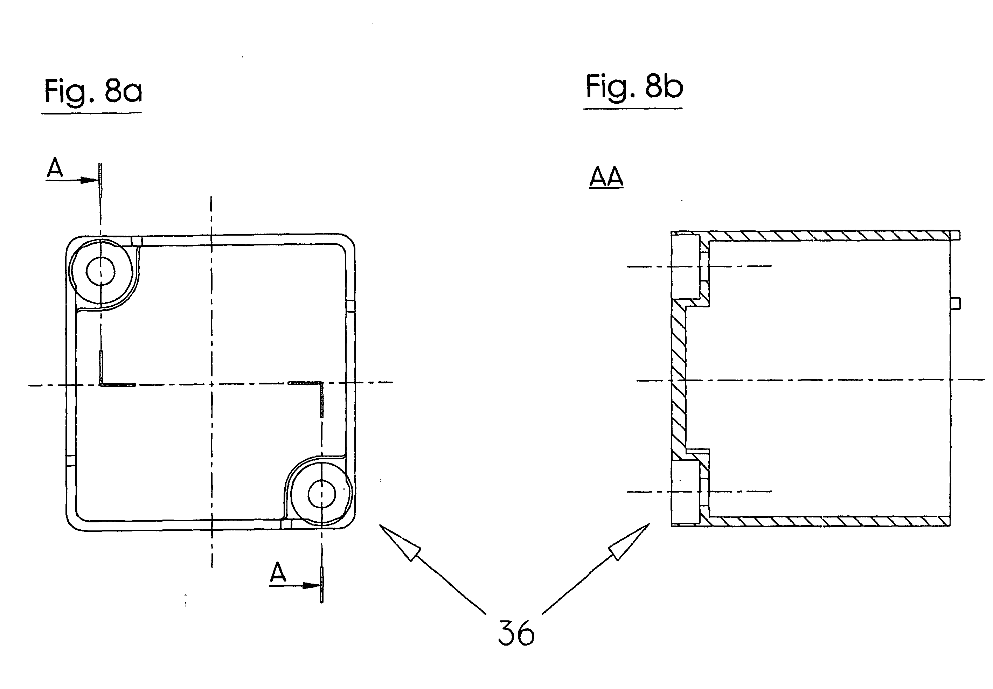

Sofern der Drehwinkelgeber 5 auf der gegenüberliegenden Stirnseite, also dem Lagerschild 14, von einem zusätzlichen Gehäuse-Aufsatz 36 in Form einer Kappe geschützt werden soll, welche vorzugsweise ebenfalls in Längsrichtung betrachtet rechteckigen bzw. quadratischen Querschnitt analog dem Hauptteil der Lagerschilde 13,14 aufweist, so wird ein solcher in Fig. 8 dargestellter Gehäuseaufsatz 36 vor dem Verschrauben der Lagerschilde 13,14 bereits stirnseitig außen auf den Lagerschild 14 aufgesetzt und durch Verwendung entsprechend längerer Schrauben dort mitverschraubt, wobei hierfür insbesondere kopflose Gewindestifte verwendet werden, auf welche beidseits Muttern aufgesetzt werden können. Entsprechende Durchgangsöffnungen sind in dem Gehäuseaufsatz 36 vorzugsweise nur an zwei einander diagonal gegenüberliegenden Ecken, also entsprechend den nur der Verschraubung der Lagerschilde 13,14 dienenden Positionen, vorhanden.

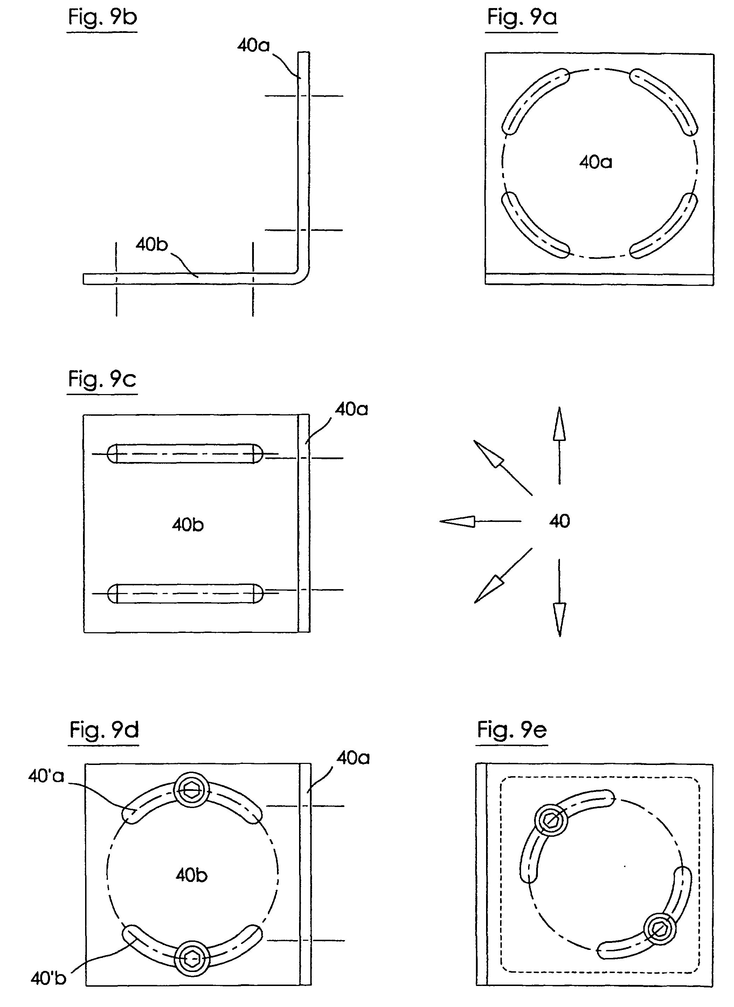

Der stirnseitigen Verschraubung des Sensors können Montagewinkel 40 dienen, wie sie in den Figuren 9 dargestellt sind. Der dem Sensor zugewandte Schenkel 40a weist dabei vorzugsweise entlang eines Kreisbogens angeordnete, teilkreisförmige Langlöcher auf, durch welche sich die in den Durchgangsöffnungen 28a,b hindurch erstreckenden Schrauben ebenfalls hindurch erstrecken sollen, so daß eine stufenlose Einstellbarkeit des Sensors gegenüber diesem Schenkel 40a in jedem beliebigen Winkel möglich ist.

Der andere, vorzugsweise im 90°-Winkel zum ersten Schenkel 40a stehende, Schenkel 40b weist ebenfalls vorzugsweise Langlöcher 44a,b... zur Verschraubung gegenüber einem tragenden Bauteil auf.

Gemäß Fig. 9c sind dies zwei Langlöcher 44a,b, die im rechten Winkel zur Verbindungskante zwischen den Schenkeln 40a und 40b verlaufen.

Gemäß Fig. 9d sind dies zwei auf einem Kreisbogen angeordnete, teilkreisförmige Langlöcher 40'a,b, um ein Verschrauben mittels zweier Schrauben in den Winkel gegenüber dem tragenden Bauteil drehen zu können.

Gemäß Fig. 9f sind dies vier Langlöcher 44"a,b,c,d, von denen zwei im rechten Winkel zur Verbindungskante zwischen den Schenkeln verlaufen, und die beiden anderen hierzu parallel, um mittels einer entsprechenden Verschraubung in beiden Richtungen Längen ausgleichen zu können.

Gemäß Fig. 9a sind die entsprechenden Langlöcher 44"'a,b... jeweils parallel zueinander, jedoch diagonal, vorzugsweise im 45°-Winkel, zur Verbindungskante zwischen den Schenkeln 40a und 40b angeordnet.

### BEZUGSZEICHENLISTE

- A: Gesamtlänge
- 1: Meßseil
- 1 a: Meßseil-Öse
- 2: Seiltromel
- 2a,b: Flanken
- 3: Flachspiralfeder
- 3': Federraum
- 4a,b,c,d: Aussenfläche
- 4': Stimfläche
- 5: Drehwinkelgeber
- 6: Poti-Lagerscheibe
- 7: Nuten
- 8: Pratzen
- 9: Seilaufsatz
- 10: Längsrichtung
- 13: Lagerschild (Feder)
- 14: Lagerschild (Seiltrommel)
- 16: Herz
- 17: Zapfen (f. äusseres Ende Feder)
- 18: Gleitscheibe
- 18': Absatz
- 19: Schlitz
- 20: Berührungsebene
- 21: Einlegemutter
- 22: Schlitz in Trommel
- 24: Vertiefungen sechseckig. in 13
- 25: Vertiefungen sechseckig. in 6
- 26a,b: Klemmschraube (Seiltrommel)
- 27: Ringkragen
- 28: Durchgangsöffnung
- 29: Durchgangsöffnung
- 30: Klemmschraube
- 31: Ringfortsatz
- 32: Grat
- 33: Drehzapfen
- 36: Gehäuse-Aufsatz
- 37a,b: Verschraubung f. 13/13
- 38a,b: Verschraubung
- 40: Montagewinkel
- 41: Seilauslauföffnung
- 42: Aussengewinde
- 43a,b: radiale Gewindebohrungen
- 40a,b: Langloch

## Patentansprüche

1. Meßseil-Wegsensor mit
- einem Meßseil (1),
- einer Seiltrommel (2) zum Aufwickeln des Meßseiles (1), einer mit der Seiltrommel (2) koaxial auf der gleichen Welle (4) drehfest angeordneten Flachspiralfeder (3),
- einem mit der Welle (4) drehfest verbundenen Drehwinkelgeber (5) und
- einem Gehäuse, welches wenigstens einen mechanischen Innenraum bildet, in dem die Seiltrommel (2) und die Flachspiralfeder (3) untergebracht sind, wobei
- das Gehäuse für den mechanischen Innenraum wenigstens zwei plane, im rechten Winkel zueinander stehende, Außenflächen (4a,b...) aufweist,
**dadurch gekennzeichnet, daß**
das Gehäuse für den mechanischen Innenraum vier im rechten Winkel zueinander stehende Außenflächen (4a,b,c,d) aufweist, die aneinander angrenzen, und in denen jeweils im gleichen Abstand zu den Berührungskanten und parallel zu diesen verlaufend nach außen offene Nuten (7a,b...) zum befestigen des Gehäuses mittels Pratzen (8) angeordnet sind.

2. Meßseil-Wegsensor nach Anspruch 1
**dadurch gekennzeichnet, daß**
- das Gehäuse für den mechanischen Innenraum einen topfförmigen Lagerschild (13) für die Flachspiralfeder und einem an beiden Stirnseiten offenen Lagerschild (14) für die Seiltrommel (2) umfaßt, sowie eine Gleitscheibe (18) am Übergang zwischen den beiden Lagerschilden und eine Poti-Lagerscheibe (6) als äußeren Abschluß des Lagerschildes (14),
- wobei insbesondere die Berührungsebene (20) zwischen den Lagerschilden (13, 14) durch den einstückig mit den Lagerschilden (13, 14) ausgebildeten Seilaufsatz (9) hindurch verläuft und die Berührungsebene (20) so angeordnet ist, daß an dem einen Lagerschild, insbesondere dem Lagerschild (13) für die Feder, nur die eine Seitenwand (9a) des hohlen Seilaufsatzes (9) angeordnet ist und an dem anderen Lagerschild, insbesondere dem Lageschild (14) für die Seiltrommel (2), alle übrigen Umfassungswände (9b - 9d) sowie die nach außen weisende Stirnfläche (9e) des Seilaufsatzes (9) angeordnet sind und
- insbesondere alle vorgenannten Teile aus Kunststoff, insbesondere POM 30, bestehen.

3. Meßseil-Wegsensor nach einem der vorherigen Ansprüche
**dadurch gekennzeichnet, daß**
- der Drehzapfen (33) des Drehwinkelgebers (5) in Längsrichtung (10) bis zur Flachspiralfeder (3) reicht und deren Herz (16) direkt in einem entsprechenden in Längsrichtung verlaufenden Schlitz (19) im freien Ende des Drehzapfens (33) drehfest aufgenommen ist, und
- insbesondere die Flachspiralfeder (3) an ihrem äußeren Ende eine durch Umbiegung um annähernd 180° gebildete flache Lasche zum axialen Aufstecken auf einen entsprechenden, außerhalb des Federraumes liegenden, Zapfen (17) des Lagerschildes (13) aufweist und
- insbesondere die Flachspiralfeder (3) so geformt ist, daß bei nichtvorgespannter, gewickelter Aufnahme im Lagerschild (13) das Herz (16) der Flachspiralfeder im Zentrum der Flachspiralfeder (3) steht.

4. Meßseil-Wegsensor nach einem der vorherigen Ansprüche
**dadurch gekennzeichnet, daß**
die Poti-Lagerscheibe (6) an ihrem vom Drehwinkelgeber (5) abgewandten stirnseitigen Ende eine insbesondere sechseckige Vertiefung zur drehfesten Aufnahme einer Einlegemutter (21) aufweist.

5. Meßseil-Wegsensor nach einem der vorherigen Ansprüche
**dadurch gekennzeichnet, daß**
in den vier Ecken der Lagerschilde (13, 14) Durchgangsbohrungen zum Unterbringen von Verschraubungen (37a,b; 38a,b) angeordnet sind, wobei zwei einander diagonal gegenüberliegende Verschraubungen zum Verschrauben der Lagerschilde (13, 14) gegeneinander dienen und die beiden anderen Verschraubungen (38a,b) mittels unter den Schraubkopf untergelegte Beilagscheiben, deren Durchmesser größer ist als der des Schraubenkopfes, zum Verklemmen der Poti-Lagerscheibe (6) in einer definierten Drehlage gegenüber den ihn aufnehmenden Lagerschild (14) dient.

6. Meßseil-Wegsensor nach einem der vorherigen Ansprüche
**dadurch gekennzeichnet, daß**
die Seiltrommel (2) in der Wickelfläche einen tangential verlaufenen, die Wickelfläche durchdringenden, Schlitz (22) für den Eintritt des Anfanges des Meßseiles (1) aufweist.

7. Meßseil-Wegsensor nach einem der vorherigen Ansprüche
**dadurch gekennzeichnet, daß**
an der Mündung der Durchgangsöffnungen für die Verschraubungen (37, 38) in der Außenfläche des topfförmigen Lagerschildes (13) für die Flachspiralfeder (3) konzentrisch nach außen offene sechseckige Vertiefungen (24) zur drehfesten Aufnahme von Muttern angeordnet sind.

8. Verfahren zur Montage eines Messeil-Wegsensors nach einem der vorhergehenben Ansprüche, mit
- einem Meßseil (1),
- einer Seiltrommel (2) zum Aufwickeln des Meßseiles (1),
- einer mit der Seiltrommel (2) koaxial auf dem Drehzapfen (33) des Drehwinkelgebers (5) drehfest angeordneten Flachspiralfeder (3),
- einem Gehäuse, welches zwei Lagerschilde (13, 14), eine dazwischengelegte Gleitscheibe (18) sowie eine Poti-Lagerscheibe (6) umfaßt und den mechanischen Innenraum mit Flachspiralfeder (3) und Seiltrommel (2) umgibt,
wobei das Verfahren folgende Schritte umfasst:
- Aufsetzen des so ausgestatteten Lagerschildes (13) auf das freie, geschlitzte Ende des Drehzapfens (33) einer aus Seiltrommel (2), Poti-Lagerscheibe (6) und Drehwinkelgeber (5) bestehenden vormontierten Einheit unter Einfädeln des Herzes (16) der Flachspiralfeder (13) auf das durch die Gleitscheibe (18) in das Lagerschild (13) hineinragenden Schlitz (19) des Drehzapfens (33) des Drehwinkelgebers (5) bis zur Anlage der Lagerschilde (13, 14) in Längsrichtung (10) gegeneinander,
- Verdrehen der Lagerschilde (13, 14) gegeneinander in die Längsrichtung (10) zwecks Aufziehen der Flachspiralfeder (3),
- Verschrauben der Lagerschilde (13, 14) gegeneinander in Längsrichtung (10) durch Einbringen der diagonal einander gegenüberliegenden Verschraubungen (37a, 38a),
- Einsetzen der beiden anderen diagonal einander gegenüberliegenden Verschraubungen (38a,b) unter Zwischenordnung von Beilagscheiben auf der Seite der Poti-Lagerscheibe (6),
- Justieren der Null-Lage der Auswerteelektronik durch Verdrehen von Drehwinkelgeber (5) und Poti-Lagerscheibe (6) relativ zu dem sie tragenden Lagerschild (14) und Festziehen der Verschraubungen (38a,b) in dieser Lage.

9. Verfahren nach Anspruch 8, wobei
die vormontierte Einheit entsteht durch
- Einlegen einer Einlegemutter (21) in eine entsprechende Vertiefung (25) der Poti-Lagerscheibe (6),
- Einschieben des am freien Ende geschlitzten Drehzapfens (33) des Drehwinkelgebers (5) von der anderen Seite her durch die Poti-Lagerscheibe (6) und Verschrauben des Außengewindes des Drehzapfens (33) gegen die Einlegemutter (21),
- Aufschieben der Seiltrommel (2) vom freien Ende des Drehzapfens (33) her bis an die Poti-Lagerscheibe (6) und Verklemmen der Seiltrommel (2) auf dem Drehzapfen (33) mittels radialer Klemmschrauben (26a,b)
- Einschieben der aus der Seiltrommel (2), Poti-Lagerscheibe (6) und Drehwinkelgeber (5) bestehenden Einheit in die äußere offene Stirnseite des beidseitig offenen Lagerschildes (14),
- Einlegen der Flachspiralfeder (3) in den topfförmigen Lagerschild (13) unter Aufschieben der Lasche des äußeren Endes der Flachspiralfeder (3) auf den entsprechenden in Längsrichtung (10) vorstehenden Zapfen (17) des Lagerschildes (13), und
- Eindrücken einer Gleitscheibe (18) in die Öffnung des topfförmigen Lagerschildes (13).

10. Verfahren nach Anspruch 8 oder 9, wobei
vor der Montage in die geschlossene Stirnseite des Teilaufsatzes (9) die Seildurchgangsbohrung (23) an der entsprechenden Stelle, abhängig von dem Durchmesser der verwendeten Seiltrommel (2) eingebracht wird.

11. Verfahren nach einem der Ansprüche 8 bis 10, wobei
alle aus Kunststoff bestehenden Teile, insbesondere die Lagerschilde (13, 14), die Poti-Lagerscheibe (6) und/oder die Gleitscheibe (18) in einem einzigem Spritzgußschritt gemeinsam innerhalb eines einzigen Formnestes gespritzt werden.

## Claims

1. A measuring cable travel sensor comprising
- a measuring cable (1),
- a cable drum (2) for winding on the measuring cable (1), a flat spiral spring (3) which is arranged non-rotatably with the cable drum (2) coaxially on the same shaft (4),
- a rotary angle sensor (5) non-rotatably connected to the shaft (4), and
- a housing which forms at least one mechanical internal space in which the cable drum (2) and the flat spiral spring (3) are disposed, whereby
- the housing for the mechanical internal space has at least two flat outside surfaces (4a, b...) which are at a right angle to each other, **characterised in that** the housing for the mechanical internal space has four outside surfaces (4a, b, c, d) which are disposed at a right angle to each other and which adjoin each other and in each of which arranged at equal spacings relative to the contact edges and extending parallel thereto are outwardly open grooves (7a, b...) for fixing the housing by means of claws (8).

2. A measuring cable travel sensor as set forth in claim 1 **characterised in that**
- the housing for the mechanical internal space includes a cup-shaped mounting plate (13) for the flat spiral spring and a mounting plate (14) which is open at both sides for the cable drum (2), as well as a sliding plate (18) at the transition between those two mounting plates and a pot mounting plate member (6) as the external closure of the mounting plate (14),
- wherein in particular the contact plane (20) between the mounting plates (13, 14) extends through the cable fitment (9) which is formed in one piece with the mounting plates (13, 14) and the contact plane (20) is so arranged that only the one side wall (9a) of the hollow cable fitment (9) is arranged at the one mounting plate, in particular the mounting plate (13) for the spring, and arranged at the other mounting plate, in particular the mounting plate (14) for the cable drum (2), are all the other embracing walls (9b-9d) and the outwardly facing front face (9e) of the cable fitment (9) and
- in particular all the above mentioned parts comprise plastic material, in particular POM 30.

3. A measuring cable travel sensor as set forth in one of the preceding claims **characterised in that**
- the rotary trunnion (33) of the rotary angle sensor (5) extends in the longitudinal direction (10) up to the flat spiral spring (3) and the core (16) thereof is non-rotatably accommodated directly in a corresponding slot (19) extending in the longitudinal direction in the free end of the rotary trunnion (33), and
- in particular the flat spiral spring (3) has at its outer end a flat bar portion formed by bending over through approximately 180° for being axially fitted onto a corresponding projection (17), which is outside the spring chamber of the mounting plate (13), and
- in particular the flat spiral spring (3) is so shaped that when accommodated in a wound, non-prestressed condition in the mounting plate (13) the core (16) of the flat spiral spring is at the center of the flat spiral spring (3).

4. A measuring cable travel sensor as set forth in one of the preceding claims **characterised in that** the pot mounting plate member (6) has at its opposed front end with respect to the rotary angle sensor (5) a recess, in particular a hexagonal one, for non-rotatably accommodating an insert nut (21).

5. A measuring cable travel sensor as set forth in one of the preceding claims **characterised in that** through bores for disposing screw means (37a, b; 38a, b) are arranged in the four corners of the mounting plates (13, 14), wherein two mutually diagonally oppositely disposed screw means serve for screwing the mounting plates (13, 14) together and the other two screw means (38a, b), by means of some supplementary washers which are disposed under the screw head and whose diameter is larger than that of the screw head, serve for clamping the pot mounting plate member (6) in a defined rotational position with respect to the mounting plate (14) accommodating it.

6. A measuring cable travel sensor as set forth in one of the preceding claims **characterised in that** the cable drum (2) has in the winding surface a tangentially extending slot (22) which passes through the winding surface for the entry of the beginning of the measuring cable (1).

7. A measuring cable travel sensor as set forth in one of the preceding claims **characterised in that** at the mouth of the through openings for the screw means (37, 38) in the outside surface of the cup shaped mounting plate (13) for the flat spiral spring (3) are concentrically outwardly open hexagonal recesses (24) for non-rotatably receiving nuts.

8. A method of assembling a measuring cable travel sensor as set forth in one of the preceding claims, comprising
- a measuring cable (1),
- a cable drum (2) for winding on the measuring cable (1),
- a flat spiral spring (3) arranged non-rotatably with the cable drum (2), coaxially on the rotary trunnion (33) of the rotary angle sensor (5),
- a housing which includes two mounting plates (13, 14), a sliding plate (18) and a pot mounting plate member (6) and which encloses the mechanical internal space with the flat spiral spring (3) and the cable drum (2), wherein the method includes the following steps:
- fitting the mounting plate (13) equipped in that way onto the free slotted end of the rotary trunnion (33) of a pre-assembled unit comprising the cable drum (2), the pot mounting plate member (6) and the rotary angle sensor (5), with the core (16) of the flat spiral spring (13) being inserted onto the slot (19), which projects through the sliding plate (18) into the mounting plate (13), of the rotary trunnion (33) of the rotary angle sensor (5), until the mounting plates (13, 14) bear against each other in the longitudinal direction (10),
- rotating the mounting plates (13, 14) relative to each other in the longitudinal direction (10) for the purpose of tightening the flat spiral spring (3),
- screwing the mounting plates (13, 14) to each other in the longitudinal direction (10) by introducing the screw means (37a, 38a) which are disposed in diagonally mutually opposite relationship,
- inserting the other two screw means (38a, b) which are disposed in diagonally mutually opposite relationship, with the interposition of supplementary washers on the side of the pot mounting plate member (6),
- adjusting the zero position of the electronic evaluation system by rotating the rotary angle sensor (5) and the pot mounting plate member (6) relative to the mounting plate (14) carrying same and tightening the screw means (38a, b) in that position.

9. A method as set forth in claim 8, wherein the pre-assembled unit is produced by
- inserting an insert nut (21) into a corresponding recess (25) in the pot mounting plate member (6),
- inserting the rotary trunnion (33) of the rotary angle sensor (5), which is slotted at the free end, from the other side through the pot mounting plate member (6) and screwing on the male screwthread of the rotary trunnion (33) with the insert nut (21),
- pushing the cable drum (2) from the free end of the rotary trunnion (33) up to the pot mounting plate member (6) and clamping the cable drum (2) onto the rotary trunnion (33) by means of radial clamping screws (26a, b)
- inserting the unit comprising the cable drum (2), the pot mounting plate member (6) and the rotary angle sensor (5) into the outer open end of the mounting plate (14) which is open at both sides,
- inserting the flat spiral spring (3) into the cup-shaped mounting plate (13) with the flat bar portion of the outer end of the flat spiral spring (3) being pushed onto the corresponding projection (17) of the mounting plate (13), the projection protruding in the longitudinal direction (10), and
- pressing a sliding plate member (18) into the opening of the cup-shaped mounting plate (13).

10. A method as set forth in claim 8 or 9, wherein before fitting into the closed end of the fitment portion (9) the cable through bore (23) is produced at the appropriate location, in dependence on the diameter of the used cable drum (2).

11. A method as set forth in claim 8 through 10, wherein all parts comprising plastic material, in particular the mounting plates (13, 14), the pot mounting plate member (6) and/or the sliding plate (18), are injection molded jointly in a single injection molding step with a single mold cavity.

## Revendications

1. Senseur de déplacement avec câble de mesure, avec
- un câble de mesure (1)
- un tambour pour le câble (2) pour l'enroulement du câble de mesure (1), un ressort spiral plat (3) disposé rigidement à rotation avec le tambour pour le câble (2) de manière coaxiale sur le même axe (4)
- un traducteur de l'angle de rotation (5) joint rigidement à rotation avec l'axe (4) et
- un boîtier qui forme au moins un espace intérieur mécanique dans lequel on introduit le tambour pour le câble (2) et le ressort spiral plat (3), où
- le boîtier pour l'espace intérieur mécanique présente au moins deux surfaces extérieures planes (4a, b...) situées en angle droit l'une par rapport à l'autre **caractérisé en ce que** le boîtier pour l'espace intérieur mécanique présente quatre surfaces extérieures (4a, b, c, d) situées en angle droit entre elles qui sont voisines entre elles et dans lesquelles à la même distance par rapport aux chants de contact et déroulées parallèlement avec celles-ci, sont disposées des cannelures (7a, b...) ouvertes vers l'extérieur pour la fixation du boîtier par l'intermédiaire des griffes (8).

2. Senseur de déplacement avec câble de mesure selon la revendication 1 **caractérisé en ce que**,
- le boîtier pour l'espace intérieur mécanique comprend un bouclier de palier (13) en forme de pot pour le ressort spiral plat et un bouclier de palier (14), ouvert dans toutes les deux parties frontales pour le tambour pour le câble (2), aussi bien qu'un disque de glissement (18) au passage entre les deux boucliers de palier et un disque de palier potentiométrique (6) comme fermeture extérieure du bouclier de palier (14),
- où spécialement le plan de contact (20) entre les boucliers de palier (13, 14) se déroule par le couvercle pour le câble (9) formé de manière unitaire avec les boucliers de palier (13, 14) et le plan de contact (20) est disposé de sorte qu'à l'un d'entre les boucliers de palier, spécialement au bouclier de palier (13) pour le ressort est disposé seulement une paroi latérale (9a) du couvercle pour le câble (9), creux et à l'autre bouclier de palier spécialement au bouclier de palier (14) pour le tambour pour le câble (2) sont disposées toutes les autres parois entourantes (9b - 9d) aussi bien que la surface frontale (9e) dirigée vers l'extérieur du couvercle pour câble (9) et
- spécialement toutes les pièces mentionnées antérieurement sont en matière plastique, spécialement en POM 30.

3. Senseur de déplacement avec câble de mesure selon l'une des revendications antérieures, **caractérisé en ce que**,
- l'axe de rotation (33) du traducteur de l'angle de rotation (5) atteint dans la direction longitudinale (10) jusqu'au ressort spiral plat (3) et dont le coeur (16) est fixé rigidement à rotation directement dans une entaille (19) déroulée de manière correspondante dans la direction longitudinale dans le bout libre de l'axe de rotation (33) et
- spécialement le ressort spiral plat (3) présente à son bout extérieur une éclise aplatie formée par le courbement presque à 180° pour l'introduction axiale sur une proéminence correspondante (17) située à l'extérieur de l'espace pour le ressort du bouclier de palier (13) et
- spécialement le ressort spiral plat (3) est tellement formé qu'à l'introduction non-précontrainte, enroulé dans le bouclier de palier (13), le coeur (16) du ressort spiral plat reste dans le centre du ressort spiral plat (3).

4. Senseur de déplacement avec câble de mesure selon l'une des revendications antérieures, **caractérisé en ce que**, le disque de palier potentiométrique (6) à son extrémité frontale opposée par rapport au traducteur de l'angle de rotation (5) présente un creux hexagonal pour inclure rigidement à rotation un écrou inséré (21).

5. Senseur de déplacement avec câble de mesure selon l'une des revendications antérieures, **caractérisé en ce que**, dans les quatre coins des boucliers de palier (13, 14) sont disposés des trous de passage pour l'introduction des joints à vis (37a, b; 38a, b) où deux joints à vis opposés en diagonale servent au vissage entre eux des boucliers de palier (13, 14) et les autres deux joints à vis (38a,b) servent au serrage du disque de palier potentiométrique (6) dans une certaine position angulaire par rapport au bouclier de palier (14) dans lequel est inclu, par l'intermédiaire d'une rondelle supplémentaire assise sous la tête de la vis, dont le diamètre est plus grand que le diamètre de la tête de la vis.

6. Senseur de déplacement avec câble de mesure selon l'une des revendications antérieures, **caractérisé en ce que**, le tambour pour le câble (2) présente dans la surface d'enroulement une entaille (22) déroulée tangentiellement qui perce la surface d'enroulement pour l'entrée du commencement du câble de mesure (1).

7. Senseur de déplacement avec câble de mesure selon l'une des revendications antérieures, **caractérisé en ce que**, à la bouche des trous de passage pour les joints à vis (37, 38) dans la surface extérieure du bouclier de palier (13) en forme de pot pour le ressort spiral plat (3) de manière concentrique vers l'extérieur sont disposés des creux hexagonaux (24) ouverts vers l'extérieur qui sont pour l'inclusion des écrous rigides à rotation.

8. Procédé pour le montage d'un senseur de déplacement avec câble de mesure, selon l'une des revendications antérieures, avec
- un câble de mesure (1)
- un tambour pour le câble (2) pour l'enroulement du câble de mesure (1)
- un ressort spiral plat (3) disposé rigidement à rotation avec le tambour pour le câble (2) de manière coaxiale sur l'axe de rotation (33) du traducteur de l'angle de rotation (5),
- un boîtier qui comprend deux boucliers de palier (13, 14), un disque de glissement (18) aussi bien qu'un disque de palier potentiométrique (6) et qui entoure l'espace intérieur mécanique avec le ressort spiral plat (3) et le tambour pour le câble (2), où le procédé comprend les pas suivants:
- la position du bouclier de palier (13) tellement équipé sur le bout libre entaillé de l'axe de rotation (33) d'une unité pré-montée consistant du tambour pour le câble (2), le disque de palier potentiométrique (6) et le traducteur de l'angle de rotation (5) par l'introduction du coeur (16) du ressort spiral plat (13) par l'entaille (19) de l'axe de rotation (33) du traducteur de l'angle de rotation (5) pénétré par le dique de glissement (18) dans le bouclier de palier (13) jusqu'à l'attachement l'un de l'autre des boucliers de palier (13, 14) dans la direction longitudinale (10)
- la rotation des boucliers de palier (13, 14) entre eux dans la direction longitudinale (10) dans le but de la tension du ressort spiral plat (3)
- le vissage des boucliers de palier (13, 14) entre eux dans la direction longitudinale (10) par l'introduction des joints à vis (37a, 38a) opposés en diagonale l'un par rapport à l'autre,
- l'introduction des autres deux joints à vis (38a, b) opposés en diagonale l'un par rapport à l'autre par l'intercalation d'une rondelle supplémentaire sur le côté du disque de palier potentiométrique (6)
- l'ajustement de la position de nul de l'électronique d'évaluation par la rotation du traducteur de l'angle de rotation (5) et du disque de palier potentiométrique (6) relativement par rapport au bouclier de palier (14) qui le soutient et le serrage des joints à vis (38a, b) dans cette position.

9. Procédé selon la revendication 8, où l'unité pré-montée est formée par
- l'introduction d'un écrou (21) dans un creux correspondant (25) du disque de palier potentiométrique (6)
- l'introduction de l'axe de rotation (33) du traducteur de l'angle de rotation (5), entaillé au bout libre du côté de l'autre partie par le disque de palier potentiométrique (6) et le vissage du filet extérieur de l'axe de rotation (33) avec l'écrou inséré (21)
- l'introduction du tambour pour le câble (2) du côté du bout libre de l'axe de rotation (33) jusqua'au disque de palier potentiométrique (6) et le serrage du tambour pour le câble (2) sur l'axe de rotation (33) par l'intermédiaire des vis de serrage (26a, b), radials
- l'introduction de l'unité consistant du tambour pour le câble (2), le disque de palier potentiométrique (6) et le traducteur de l'angle de rotation (5) dans la partie frontale ouverte extérieure du bouclier de palier (14) ouvert dans toutes les deux parties
- l'introduction du ressort spiral plat (3) dans le bouclier de palier (13) en forme de pot par l'introduction de l'éclise du bout extérieur du ressort spiral plat (3) sur la proéminence correspondante (17) dirigée dans la direction longitudinale (10) du bouclier de palier (13), et
- le pressage du disque de glissement (18) dans l'orifice du bouclier de palier (13) en forme de pot.

10. Procédé selon la revendication 8 ou 9, où avant du montage dans la partie frontale fermée du couvercle partiel (9), on réalise le trou de passage pour le câble (23) dans le lieu correspondant, dépendant du diamètre du tambour pour le câble (2) utilisé.

11. Procédé selon l'une des revendications 8 à 10, où toutes les pièces sont en matière plastique, spécialement les boucliers de palier (13, 14), le disque de palier potentiométrique (6) et/ou le disque de glissement (18) qui sont injectés ensemble dans une seule phase d'injection à l'intérieur d'une seule cavité de moule.
